# EUROPEAN PATENT APPLICATION

(11) **EP 4 539 348 A1**
(43) Date of publication of application: **16.04.2025**
(21) Application number: 24205387.4
(22) Date of filing: 08.10.2024
(51) Int. Cl.: H04B 5/48, H04B 7/04, H04B 7/06

(54) **EXCITATION SOURCE SYSTEM AND FIRST DEVICE FOR MANAGING BACKSCATTER INTERFERENCE**

(30) Priority: 13.10.2023 EP 23203597
(71) Applicant: Koninklijke KPN N.V., 3072 AP Rotterdam (NL)
(72) Inventor: MEUNIER, Ben Charles Emmanuel, Tonbridge, TN10 4JT (GB); DUFFY, David Michael, 8047 Zurich (CH); CRONIN, Harry Michael, Cambridge, CB1 3DE (GB)
(74) Representative: De Vries & Metman

(57) **Abstract**

The disclosure pertains to an excitation source system configured to transmit a first signal to a first device, for example a reader device, and a second signal to a second device, for example a backscatter device containing data to be collected by the reader device. The second signal is configured to excite the second device to generate a backscatter signal receivable by the first device. The source excitation system is configured to receive a feedback signal from the first device. The feedback signal may enable the excitation source system to determine feedback information based on reception of the first excitation signal and the backscatter signal at the first device. The excitation source system may further be configured to determine one or more adjustment parameters, based on the feedback information, for an adjusted first signal. The adjusted first signal may enable managing reception quality at the first device of a further backscatter signal triggered by a further second signal from the excitation source system.

## Description

### TECHNICAL FIELD

The present disclosure relates to an excitation source system and first device, for example a backscatter reading device, for managing reception quality of a backscatter signal from a second device. In particular, the disclosure relates to managing interference of the backscatter signal at the first device.

### BACKGROUND

Low-power networks are a crucial component of Internet-of-Things (loT) and machine-to-machine (M2M) communication. Low power devices may, for example, rely on energy-harvesting, which requires that these devices must operate in an energy efficient manner. Such devices may be referred to as power-constrained devices.

For example, 3GPP recently issued a study on ambient power-enabled loT devices, in Technical Recommendation 3GPP TR 22.840. The document discloses use cases and requirements for ambient power-enabled loT devices, being battery-less devices with limited energy storage capability (a capacitor may be included) wherein the energy is provided through the harvesting of radio waves, for example. Such ambient power-enabled loT devices are preferably of low complexity.

Backscatter communication is one of the core-technologies to realize zero-power communication. Backscatter communication may involve a source device generating a signal powering a backscatter device and triggering a backscatter signal from this device. The backscattered signal may be modulated to carry data in the backscattered signal which may be received by a local reader device as a destination or hub for the data.

One of the challenges in such a communication system is that the backscattered signal is not easy to receive at the reader device. Difficulties in the reception of the backscattered signal are caused by double-channel fading of the backscattered signal reducing the signal strength at the reader device and the strong direct link between the source device and the reader device drowning the weaker backscattered signal. To address the latter, it has been proposed for the backscatter device to employ frequency modulation of the backscattered signal, but this adds undesirable complexity to the backscatter device.

### SUMMARY

To improve reception of the backscatter signal at the reader device, the inventors have realized that the above conditions in backscatter communication can be used to advantage for the receipt of the backscatter signal. In particular, the inventors aim to enhance reception of the backscatter signal by adapting the source signal from the source device, thereby requiring no or only little adaptations to the backscatter device.

One aspect of the present disclosure involves an excitation source system configured to transmit a first signal to a first device, for example a reader device, and a second signal to a second device, for example a backscatter device containing data to be collected by the reader device. The second signal is configured to excite the second device to generate a backscatter signal receivable by the first device. The source excitation system is configured to receive a feedback signal from the first device. The feedback signal may enable the excitation source system to determine feedback information based on reception of the first excitation signal and the backscatter signal at the first device. The excitation source system may further be configured to determine one or more adjustment parameters, based on the feedback information, for an adjusted first signal. The adjusted first signal may enable managing reception quality at the first device of a further backscatter signal triggered by a further second signal from the excitation source system.

Another aspect of the present disclosure pertains to a first device, for example a reader device, configured to read data from a second device, for example a backscatter device, through backscatter communication, wherein backscatter communication is triggered by an external excitation source system. The first device is configured to receive a first signal from the excitation source system and to receive a backscatter signal from the second device. The first device may further be configured to transmit a feedback signal to the excitation source system enabling the excitation source system to determine feedback information based on the first excitation signal and the backscatter signal.

Where the first signal from the excitation source system was previously considered a disadvantage for reception of the backscatter signal at the reader, it is disclosed herein to make use of the first signal by determining adjustment of the first signal in an initialization phase, if necessary, based on feedback on reception of the first signal and the backscatter signal at the reader device. By managing the reception quality at the reader device, reception of data during a data obtaining phase can be controlled when the adjusted first signal and the further second signal are transmitted.

The initialization phase, i.e. the phase of obtaining the adjustment parameters, may be conducted several times, for example repetitively, alternately with the data obtaining phase, or under control of a managing system.

It should be appreciated that the feedback information may contain measurement data on the first signal and backscatter signal or processed measurement data. For example, the feedback signal may contain raw measurement data such as signal strength, signal phase, etc. of individual signals or may contain processed signal data, such as signal strength difference, phase difference, etc. The nature of the feedback signal depends, for example, on the capacity of the excitation source system and the first device. In some embodiments, the feedback information may contain one or more of the adjustment parameters derived at the first device that can be applied by the excitation source system when received in the feedback signal.

It should also be appreciated that the use of interference in backscatter communication systems has been previously described by Gu et al in IEEE Transaction on Communications, Volume 71, 4344-4359 using tag selection. The present disclosure operates independent of the tag position by enabling adjustment of the characteristics, such as phase and/or amplitude, of the first signal to optimize reception of backscatter signal at the first device.

In one embodiment, the feedback information obtained at the excitation source system may relate to a phase difference at the reader device between the first signal and the backscatter signal. The adjustment parameter derived from the feedback information may relate to a phase shift for the first signal to obtain constructive interference between the adjusted first signal and the further backscatter signal at the first device.

In one embodiment, the feedback information provided by the first device relates to phases of the first signal and the backscatter signal, a phase difference between the first signal and the backscatter signal, and/or a phase shift for the first signal.

By informing the excitation source system of the phase required for the first signal to obtain constructive interference of the phase-adjusted first signal and the further backscatter signal, reception quality at the first device can be enhanced.

In one embodiment, the feedback information obtained at the excitation source system may further relate to at least one of a signal-to-noise ratio, SNR, of the backscatter signal and an error estimate for the backscatter signal.

In one embodiment, the feedback information provided by the first device may further relate to at least one of a signal-to-noise ratio, SNR, of the backscatter signal and an error estimate for the backscatter signal.

Both the SNR and error estimate can be used to manage the reception quality of the backscatter signal at the first device. If the SNR is low, for example, the first signal can be phase and amplitude adjusted to enhance the reception quality. If the error estimate indicates that reception quality is already good during the initialization phase, adjustments of the first signal may be minor or even absent.

In one embodiment, the excitation source system may be configured such that the first signal contains a predetermined data sequence, and the second signal also contains the predetermined data sequence, or an indication configured to trigger the second device to include the predetermined data sequence in the backscatter signal. In the latter case, the second device may have pre-stored the predetermined data sequence. The indication may also instruct the second device to not include the predetermined data sequence. The indication may also instruct the second device to not include any other data, such as the data intended to be read (for example an identifier or sensor data).

In one embodiment, the first device may be configured to receive and process a predetermined data sequence in the first signal and the predetermined data sequence in the backscatter signal to derive an error estimate for the backscatter signal and to transmit the error estimate in the feedback signal.

In one embodiment, the first device may be configured to pre-store a predetermined data sequence in the first device and receive the predetermined data signal in the backscatter signal to derive an error estimate for the backscatter signal and to transmit the error estimate in the feedback signal.

The predetermined data sequence may be a known data sequence and may have been received by the first device prior to receiving the sequence from the second device. The embodiment enables obtaining the error estimate and to decide on adjustment of the first signal. If reception quality is good during the initialization phase, the data obtaining phase may not be necessary to obtain data for a particular second device. Energy may be saved, on the other hand, if the indication is to instruct the second device to not include the predetermined data sequence.

In one embodiment, the excitation source system may be configured to transmit the first signal with a time delay with respect to the second signal. The embodiment enables taking into account path differences for the first and second signals and/or processing time delay at the second device, if any.

In one embodiment, the excitation source system may be configured to perform beamforming of the first signal and the second signal. Beamforming enables targeting specific devices. Beamforming is known, for example, in telecommunications systems, such as 5G telecommunication systems, where precoding matrix processing is applied to direct a signal to a particular target.

In one embodiment, the excitation source system is configured to receive a control capacity request from the first device and provide a control capacity indication to the first device.

In one embodiment, the first device is configured to transmit a control capacity request to the excitation source system and to receive a control capacity indication from the excitation source system.

The embodiment allows the first device to determine whether the excitation source system is controllable, i.e. capable of adjusting the first signal to manage reception quality at the first device.

In one embodiment, the excitation source system may be configured to transmit the adjusted first signal to the first device in accordance with the one or more adjustment parameters and to transmit the further second signal to the second device, wherein the further second signal is configured to trigger the further backscatter signal.

In one embodiment, the first device may be configured to receive an adjusted first signal from the excitation source system and to receive a further backscatter signal containing data of the second device, wherein the further backscatter signal is enhanced by the adjusted first signal.

The embodiment relates to the data obtaining phase, wherein use is made of the adjustment of the first signal as determined during the initialization phase to enhance the probability of good reception of the data from the second device at the first device.

In one embodiment, the excitation source system may be configured to contain or be connected to a reflective intelligent surface, RIS, to obtain the first adjusted signal by adjusting the first signal in accordance with the one or more adjustment parameters. The RIS can be used to enable control of the first signal by controlling reflection of an incoming signal from an excitation source to generate the adjusted first signal. That is, the RIS is especially useful during the data obtaining phase if adjustment of the first signal is determined and necessary, for example when an excitation source itself is not controllable for managing the reception quality.

In one embodiment, the excitation source system may be configured to contain or be connected to an orchestrating system configured to coordinate a plurality of excitation sources in the excitation source system regarding transmission of at least one of the first signal, the second signal, the adjusted first signal and the further second signal. The orchestrating system may be used to enhance backscatter communication for a whole system when multiple devices are employed in the system. Such plurality of excitation sources may be an antenna array, for example a multiple output antenna array such as a MIMO antenna array.

In one embodiment, the excitation source system may be implemented at least in part in a telecommunications system, such as a 4G, 5G or 6G telecommunications system.

In one embodiment, the first device may be a 3GPP standard compliant device, such as a user equipment, UE, configured to communicate wirelessly with a 3GPP standard compliant telecommunications network, such as a 4G, 5G or 6G telecommunications network.

The excitation source system may comprise one or more base stations of a telecommunications network that may have been employed in the desired area for backscatter communication and provides capabilities for providing and adjusting the first signal as disclosed herein.

One aspect of the disclosure relates to a method in an excitation system comprising the step of transmitting a first signal to a first device and a second signal to a second device. The second signal may be configured to excite the second device to generate a backscatter signal receivable by the first device. The method may further include the step of receiving a feedback signal from the first device and determining from the feedback signal feedback information based on reception of the first excitation signal and the backscatter signal. Another step may involve determining one or more adjustment parameters, based on the feedback information, for an adjusted first signal for managing reception quality at the first device of a further backscatter signal triggered by a further second signal from the excitation source system.

Another aspect of the disclosure involves a method in a first device configured to read data from a second device through backscatter communication, wherein backscatter communication is triggered by an external excitation source system. Steps in the first device may include receiving a first signal from the excitation source system and receiving a backscatter signal from the second device. A further step may include transmitting a feedback signal to the excitation source system enabling the excitation source system to determine feedback information based on reception of the first excitation signal and the backscatter signal.

Yet a further aspect of the disclosure pertains to a system comprising an excitation source system, at least one first device and one or more second devices as disclosed herein. The excitation source system is configured to transmit a first signal to the first device and a second signal to the second device. The first device is configured to read data from the at least one second device through backscatter communication, wherein backscatter communication is triggered by the external excitation source system. The second device contains data for the first device and is configured to receive the second signal to trigger a backscatter signal for the first device containing the data.

The excitation source system is configured to receive a feedback signal from the first device, the feedback signal enabling the excitation source system to determine feedback information based on reception of the first excitation signal and the backscatter signal and to determine one or more adjustment parameters, based on the feedback information, for an adjusted first signal for managing reception quality at the first device of a further backscatter signal triggered by a further second signal from the excitation source system.

The first device is configured to receive the first signal from the excitation source system and to receive a backscatter signal from the second device and to transmit a feedback signal to the excitation source system enabling the excitation source system to determine feedback information based on reception of the first excitation signal and the backscatter signal.

The second device is configured to receive the second signal to trigger a backscatter signal for the first device containing the data.

Further embodiments of the system containing the excitation source system, the first device and at least one second device are described herein for the excitation source system and the first device separately.

It should be noted that the first device may be configured to control the excitation source system as to how to adjust the first signal.

In an embodiment, the excitation source system is configured to transmit a first signal to a first device and a second signal to a second device, wherein the second signal is configured to excite the second device to generate a backscatter signal receivable by the first device. The excitation source system may be configured to receive a feedback signal from the first device. The feedback signal may enable the excitation source system to determine feedback information based on reception of the first excitation signal and the backscatter signal and the feedback information may contain the adjustment parameters. The excitation source system may be configured to apply the adjustment parameters, based on the feedback information, for the adjusted first signal for managing reception quality at the first device of a further backscatter signal triggered by a further second signal from the excitation source system.

In an embodiment, the first device is configured to configured to read data from a second device through backscatter communication, wherein backscatter communication is triggered by an external excitation source system. The first device may be configured to receive a first signal from the excitation source system, receive a backscatter signal from the second device and determine one or more adjustment parameters to adjust the first signal based on the reception of the first signal and the backscattered signal and to transmit a feedback signal to the excitation source system containing the one or more adjustment parameters.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java, Smalltalk, C++ or the like and conventional procedural programming languages, such as the "C" programming language or similar programming languages. The program code may execute entirely on the person's computer, partly on the person's computer, as a stand-alone software package, partly on the person's computer and partly on a remote computer, or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures Illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1 is a schematic illustration of a system comprising an excitation source system, first device and second device as disclosed herein;
FIGS. 2A-2C are more detailed schematic illustrations of examples of an excitation source system, a first device and a second device, respectively, of the system shown in FIG. 1;
FIG. 3 is a time diagram showing steps of a method for improving backscatter signal reception by the first device from the second device;
FIG. 4 is a more detailed chart of possible steps of a method for improving backscatter signal reception by the first device from the second device; and
FIG. 5 depicts an example of a processing system according to an embodiment of an excitation source system or first device or a part thereof.

### DETAILED DESCRIPTION OF THE DRAWINGS

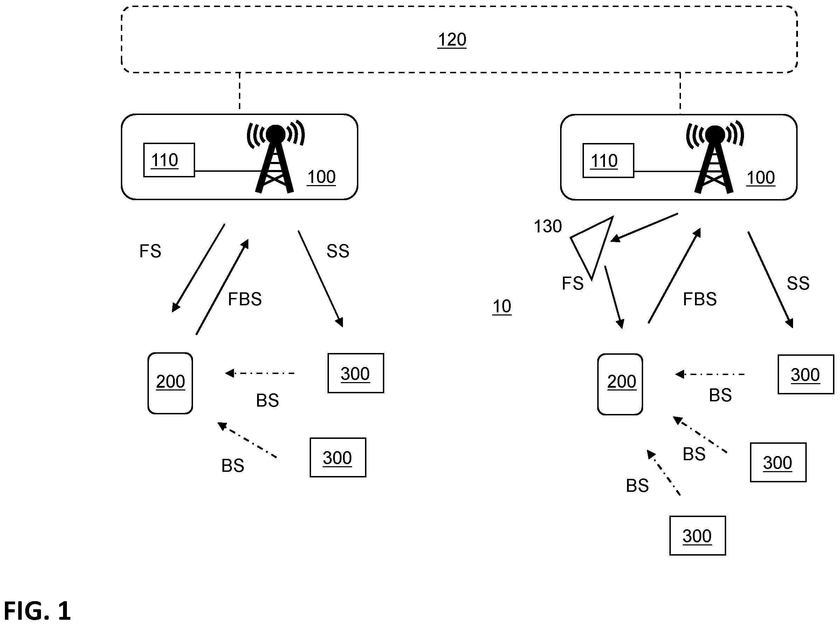

FIG. 1 is a schematic illustration of a backscatter communication system 10 comprising one or more excitation source systems 100, one or more first devices 200 and one or more second devices 300. The excitation sources 100 may, optionally, be under control of an orchestrating system 120. A reconfigurable intelligent surface (RIS) 130 may be provided as part of the backscatter communication system 10 or excitation source system 100. Typically, the number of second devices 300 is sizable and considerably exceeds the number of excitation source systems 100 and, possibly, the number of first devices 200. The second devices 300 may, for example, comprise ambient power-enabled Internet of Things devices being a battery-less device with limited energy storage capability (a capacitor may be included) wherein the energy is provided through the harvesting of radio waves, for example. Such ambient power-enabled loT devices are preferably of low complexity.

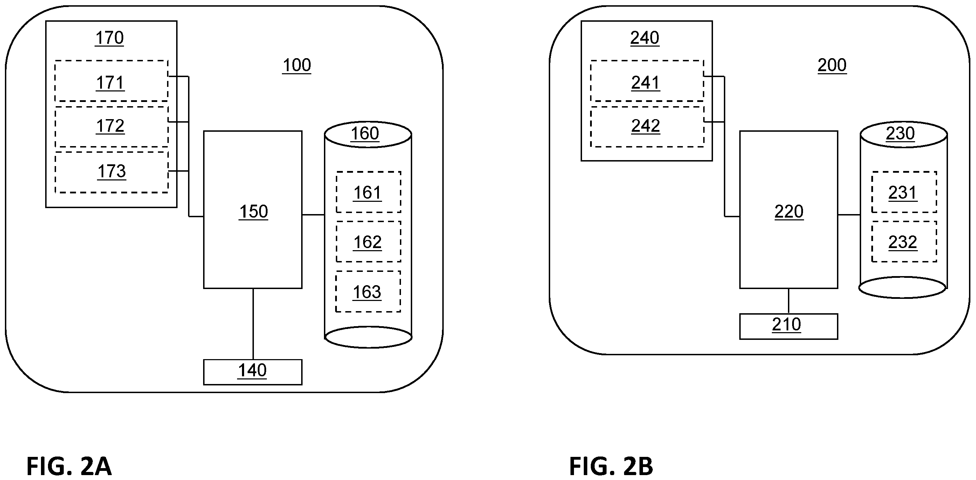

The excitation source system 100 may comprise a 3GPP standard compliant base station, such as a gNb of a 5G or 6G telecommunications system. The excitation source system 100 may comprise a plurality of components 110 that will be described in greater detail with reference to FIG. 2A. Communications with a first device 200 and a second device 300 may be over the radio interface of the telecommunications network using the base station systems 100 of the system 10. The orchestrating system 120 may be part of the telecommunications network.

Although the present disclosure will mainly refer to wireless transmissions from the source excitation system 100 as signals, the skilled person will appreciate that these signals may take the forms of transmission beams. Beamforming is a well-known measure taken in telecommunications networks for 5G and beyond and may be used to direct signals to specific devices 200, 300. For example, the skilled person will appreciate that the beams for the first signal and the second signals may be superimposed and that precoding weights may be applied to delay a signal, for example.

It should also be noted that the excitation source system 100 may be a standalone system or a system that is itself connected to another network in a wired or wireless fashion.

The orchestrating system 120 is configured to orchestrate operation of the various excitation source systems 100. Where multiple systems and devices are connected within a network the collection of data from the second devices may be orchestrated in such a manner that reduces interference. This may be more prevalent where each activation of a second device requires an additional signal path between the excitation source system 100 and the first device 200. The orchestration system 120 may perform querying the network of devices and scheduling the resources appropriately.

An excitation source system 100 may transmit a first signal FS and a second signal SS. The first signal FS is transmitted to a first device 200, which may also be referred to as a reader or reader device 200. The second signal SS is transmitted to a second device 300, which may also be referred to as tag or backscatter device 300. The second device 300 may contain data to be obtained by the first device 200 through backscatter communication BS. The second device 300 is excited by the second signal SS from the excitation source system 100 which triggers transmission of the backscatter signal BS for a limited duration of time as is known by the skilled person.

In an initialization phase, the first device 200 transmits a feedback signal FBS to the excitation source system 100 to determine feedback information based on reception of the first excitation signal FS and the backscatter signal BS.

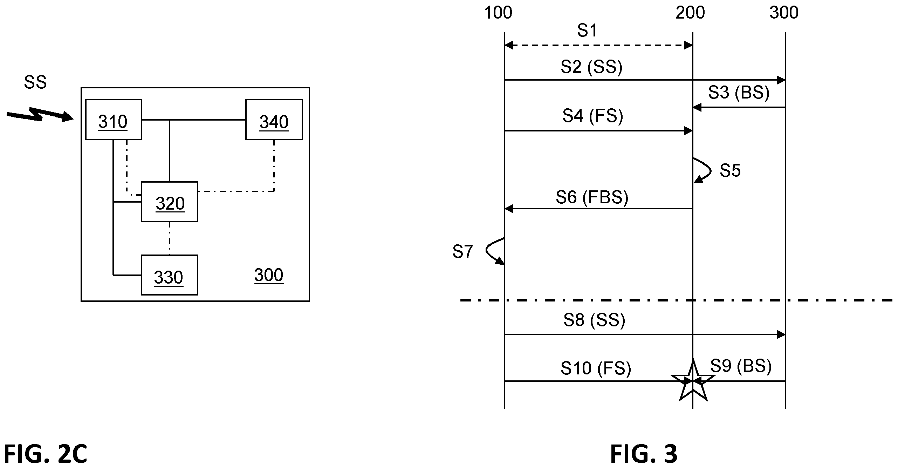

More specifically, the excitation source system 100 is configured to transmit a first signal FS to a first device 200 and a second signal SS to a second device 300 containing data to be collected by the first device 200. The second signal SS is configured to excite the second device 300 to generate a backscatter signal BS receivable by the first device 200. The source excitation system 100 is configured to receive a feedback signal FBS from the first device 100. The feedback signal FBS may enable the excitation source system 100 to determine feedback information based on reception of the first excitation signal FS and the backscatter signal BS at the first device 200. The excitation source system 100 may further be configured to determine one or more adjustment parameters, based on the feedback information, for an adjusted first signal. The adjusted first signal may enable managing reception quality at the first device of a further backscatter signal triggered by a further second signal from the excitation source system 100 as will be described in further detail below with reference to FIG. 3.

From the perspective of the first device (the reader device), this device 200 is configured to read data from a second device 300 in its vicinity through backscatter communication BS, wherein backscatter communication is triggered by the external excitation source system 100. The first device 200 is configured to receive a first signal FS from the excitation source system 100 and to receive a backscatter signal BS from the second device 300. The first device 200 is configured to transmit the feedback signal FBS to the excitation source system 100 enabling the excitation source system 100 to determine feedback information based on the first excitation signal and the backscatter signal.

Where the first signal FS from the excitation source system 100 was previously considered a disadvantage for reception of the backscatter signal BS at the reader device 200, the inventors propose to make use of the first signal FS by determining an adjustment of the first signal FS in an initialization phase, if necessary, based on feedback on reception of the first signal FS and the backscatter signal BS at the reader device 200 during this initialization phase. By managing the reception quality at the reader device 200, reception of data during a data obtaining phase can be controlled when the adjusted first signal and the further second signal are transmitted. Accordingly, reception of the backscatter signal BS at the reader device 200 may be improved.

If the source excitation system 100 itself cannot be controlled or reached to adjust the first signal FS, a reconfigurable intelligent surface, RIS, 130 may be employed during at least the data obtaining phase to assist in forming the adjusted first signal FS as will be explained in greater detail with reference to FIG. 3. In particular, the RIS 130 is controllable to adjust a transmission from the source excitation system 100 by changing at least one of phase and amplitude for the first signal FS in accordance with feedback information from a feedback signal FBS from the reader device 200. The RIS may be controllable from the first device 200.

An embodiment of the operation of the backscatter communication system 10 will now be described in further detail with reference to FIGS. 2A-2C and FIG. 3.

FIG. 2A is a schematic illustration of an excitation source system 100 comprising a plurality of components 110 such as illustrated in FIG. 1. The excitation source system 100 comprises a transceiver 140 for wireless communication with reading devices 200 and tags 300. The excitation source system 100 further comprises a processor 150 and a data storage 160. The processor 150 is configured to execute various algorithms 171-173 shown as a virtual algorithm store 170. The algorithms would normally be implemented as software code executable by the processor 150. FIG. 3 illustrates some steps wherein some of these algorithms are used. It is noted that the excitation source system 100 may be configured to execute more or fewer algorithms than disclosed herein.

Data storage 160 may comprise one or more of the following data 161-163.

Data storage 160 may contain signal parameters 161 for the first signal FS and second signal SS, such as signal strength, phase etc. In particular, the signal parameters may contain signal beam parameters, including a beam vector describing a direction of a beam, beam strength and beam phase (or beam delay). Signal parameters, for example beam parameters, may apply to individual first devices 200 and second devices 300. Beamforming enables targeting specific devices. Beamforming is known, for example, in telecommunications systems, such as 5G telecommunication systems, where precoding matrix processing is applied to direct a signal to a particular target. Beamforming may be applied to the first signal FS and/or the second signal SS from the excitation source system.

Data storage 160 may also contain one or more adjustment parameters 162 obtained from the feedback signal FBS, or derived from information therein, of one or more reader devices 200. These adjustment parameters may comprise parameters for adjusting the first signal FS to obtain an enhanced signal at the reader device 200 in question, for example for constructive interference, such as one of phase (difference), signal strength and/or signal-to-noise ratio (SNR).

Data storage 160 may also contain an error threshold parameter and a predetermined data sequence 163. These can be used to determine whether adjustment of the first signal FS is needed at all from information obtained from the reader device 200, for example from the feedback signal FBS.

It should be noted that data storage 160 does not necessarily contain each of the data mentioned above. In some embodiment, similar data, such as the predetermined data sequence, may be stored or obtainable in the first device 200 and/or second device 300 as the skilled person will appreciate. Without limitation, some examples of this will be described in further detail below.

Excitation source system 100 may contain code in algorithm store 170 regarding one or more of the following algorithms for execution by the processor 150.

Adjustment estimation algorithm 171 may comprise code to determine adjustments for the first signal to improve reception of the data in the backscatter signal BS of a second device 300 in the reader device 20 that has supplied the feedback signal. The adjustments may relate to phase or phase difference and/or signal strength.

It should be appreciated that the feedback signal FBS from the reader device 200 may contain measurement data on the first signal and backscatter signal or processed measurement data. For example, the feedback signal may contain raw measurement data such as signal strength, signal phase, etc. of individual signals or may contain processed signal data, such as signal strength difference, phase difference, etc. The nature of the feedback signal depends, for example, on the capacity of the excitation source system and the first device. In some embodiments, the feedback information may contain one or more of the adjustment parameters derived at the first device that can be applied by the excitation source system when received in the feedback signal.

Dependent on the information in the feedback signal FBS, the adjustment estimation algorithm may comprise one or more sub-algorithms, including, for example, a phase difference estimation algorithm, a signal-to-noise ratio, SNR, algorithm and an error estimation algorithm.

The phase difference estimation algorithm may calculate the phase difference between the first signal FS and the backscattered signal BS and generate a value to adjust the phase of the first signal FS for an adjusted first signal.

The SNR algorithm may calculate the SNR of the combined signal at the reader device 200 and generate a value for the signal strength of an adjusted first signal.

The error estimation algorithm calculates a level of error in the data of the received backscatter signal BS on the basis of the predetermined data sequence and the error threshold parameter. If the backscatter signal BS was received appropriately at this stage, the excitation source system may conclude that adjustment of the first signal is not necessary.

Signal generation algorithm 172 may comprise code to generate at least the adjusted first signal with regard to phase and/or signal strength based on the adjustment parameters. The signal generation algorithm may generate adjusted beam parameters if the adjusted signal is a signal beam.

One or more further algorithms 173 may be present in the excitation source system 100 to further improve performance of the backscatter system 10.

It should be noted that algorithm store 170 does not necessarily contain each of the algorithms mentioned above. In some embodiments, similar algorithms, such as the adjustment estimation algorithm, may be contained in the first device 200 as the skilled person will appreciate. Without limitation, some examples of this will be described in further detail below.

FIG. 2B is a schematic illustration of a first device 200, i.e. a reader device. The reader device 200 comprises a transceiver 210 for wireless communication with excitation source systems 100 and tags 300. The reader device 200 further comprises a processor 220 and a data storage 230. The processor 220 is configured to execute various algorithms 241- 242 shown as a virtual algorithm store 240. The algorithms would normally be implemented as software code executable by the processor 220. FIG. 3 illustrates some steps wherein some of these algorithms are used. It is noted that the reader device 200 may be configured to execute more or fewer algorithms than disclosed herein.

Data storage 230 may comprise one or more of the following data 231-232.

Data storage 230 may also contain one or more adjustment parameters 231 measured from the characteristics from the first signal and the backscatter signal. These adjustment parameters may comprise parameters for adjusting the first signal FS to obtain an enhanced signal at the reader device 200 in question, for example for constructive interference, such as one of phase (difference), signal strength and/or signal-to-noise ratio (SNR). These adjustment parameters may be sent to the excitation source system 100 in the feedback signal FBS for application by this system when generating the adjusted first signal.

Data storage 230 may also contain an error threshold parameter and/or a predetermined data sequence 232. These can be used to determine whether adjustment of the first signal FS is needed at all.

The reader device 200 may contain code in algorithm store 240 regarding one or more of the following algorithms for execution by the processor 220.

Adjustment estimation algorithm 241 may comprise code to determine adjustments for the first signal to improve reception of the data in the backscatter signal BS of a second device 300 in the reader device 20 that has supplied the feedback signal with adjustment parameters for application by the excitation source system. The adjustments may relate to phase or phase difference and/or signal strength for an adjusted first signal.

It should be appreciated that the feedback signal FBS from the reader device 200 may contain measurement data on the first signal and backscatter signal or processed measurement data. For example, the feedback signal may contain raw measurement data such as signal strength, signal phase, etc. of individual signals or may contain processed signal data, such as signal strength difference, phase difference, etc. The nature of the feedback signal depends, for example, on the capacity of the excitation source system and the first device. If raw measurement data or processed measurement data are sent in the feedback signal FBS for determining the adjustment parameter(s) in the excitation source system 100, the reader device 200 may not need an adjustment estimation algorithm itself for this communication. On the other hand, in some embodiments, the feedback information may contain one or more of the adjustment parameters derived at the first device using the adjustment algorithm therein. The adjustment parameter(s) can be applied by the excitation source system when received in the feedback signal. In such embodiments, the excitation source system 100 may not need the adjustment estimation algorithm for this link.

The adjustment estimation algorithm may comprise one or more sub-algorithms, including, for example, a phase difference estimation algorithm, a signal-to-noise ratio, SNR, algorithm and an error estimation algorithm. These algorithms may process the raw measurement data of, for example, phases of the first signal FS and backscatter signal BS, the SNR, etc.

The phase difference estimation algorithm may calculate the phase difference between the first signal FS and the backscattered signal BS and generate a value to adjust the phase of the first signal FS for an adjusted first signal.

The SNR algorithm may calculate the SNR of the combined signal at the reader device 200 and generate a value for the signal strength of an adjusted first signal.

The error estimation algorithm calculates a level of error in the data of the received backscatter signal BS on the basis of the predetermined data sequence and the error threshold parameter.

One or more further algorithms 242 may be present in the excitation source system 100 to further improve performance of the backscatter system 10. An example of a further algorithm 262 may comprise a measurement algorithm to derive phases, signal strength, noise, etc for incoming signals such as first signal FS and backscatter signal BS and, possibly, to process these measurements into a phase difference, a signal-to-noise ratio, etc to be included in the feedback signal FBS.

It should be noted that algorithm store 240 does not necessarily contain each of the algorithms mentioned above. In some embodiments, similar algorithms, such as the adjustment estimation algorithm, may be contained in the excitation source system 100 as the skilled person will appreciate. Without limitation, some examples of this will be described in further detail below.

FIG. 2C is a schematic illustration of a second device 300 configured for backscatter communication. The second device 300 may be an ambient loT device, RFID device, NFC device, also referred to as tag device herein. The device 300 is configured to receive the second signal SS from the excitation system 100 to provide power. The device 300 comprises a power harvesting part 310, a processing part 320 and a storage part 330 configured to store data. Power supply lines to these parts are indicated by the solid lines and signal lines by the dashed-dotted lines.

The device 300 also comprises at least one communication part to generate the backscatter signal, which is assumed to be contained in the power harvesting part 310 in FIG. 2C. The second device 300 may comprise further parts or functions, such as at least one sensor 340 (or a connector therefore). It should be appreciated that the second device 300 may comprise a plurality of sensors 340 or connectors therefore. Examples of sensors include a location sensor, a temperature sensor, a humidity sensor, a light sensor, a pressure sensor, a motion sensor etc. A time stamp generator may also be a function available in the device, to include time stamps in data transmissions.

It should be appreciated that the backscatter devices 300 may comprise more or fewer parts. Essentially, the backscatter device is configured to be excited from an external signal, such as second signal SS, to generate a backscatter signal BS for the reader device 200. It may have limited, if any, energy storage capability (one or more capacitors may be included) wherein the energy is provided through the harvesting of radio waves (e.g. from the excitation source system 100). The backscatter device 300 may not be capable of storing any significant power provided to it and may use the supplied power almost immediately in order to complete its actions. The backscatter device 300 may be equipped with beamforming capabilities.

Aspects of operation of the backscatter communication system 10, including aspects of each of the participating systems and devices, are shown in relation in the time diagram of FIG. 3. The dashed-dotted line indicates a separation of the initialization phase and the data obtaining phase, for example.

Generally, the excitation source system 100 may be configured to receive a control capacity request from the first device 200 and provide a control capacity indication to the first device 200. The embodiment allows the first device 200 to determine whether the excitation source system 100 is controllable, i.e. capable of adjusting the first signal to manage reception quality at the first device 200.

Hence, FIG. 3 depicts an optional step S1 that may involve control and control checking operations between the excitation source system 100 and the reader device 200. An example of such a communication involves the reader device 200 verifying the control capabilities of the excitation source system 100 and/or vice versa. The reader device 200 may find out that the excitation source system 100 is capable of generating an adjusted first signal, if necessary, based on a feedback signal FBS containing raw measurement data or processed measurement data from the reader device 200. Furthermore, the step S1 may be used to obtain appropriate signal parameters, such as beam parameters to communicate with the reader device 200.

The communication of step S1 may further be used to exchange the predetermined data sequence. The predetermined data sequence may, for example be forwarded from the excitation source system 100 to the reader device 200 to be stored there in data storage 232 for future use.

In step S2, the excitation source system 100 transmits an excitation signal (the second signal, e.g. a beam signal) SS to a backscatter device 300. The second signal SS triggers the backscatter device 300 to transmit the backscatter signal BS.

In step S3, the excitation source system 100 transmits an excitation signal (the first signal, e.g. a beam signal) FS to the reader device 200.

Step S5 involves a processing step in the reader device 200. Processing step S5 may involve execution of one or more of the algorithms 241-242 as defined above. Selection of the algorithm(s) to be executed may depend on the information obtained during step S1.

In step S6, the reader device 200 transmits a feedback signal FBS to the excitation source system 100. The information in the feedback signal can be used by the excitation source system 100 to adjust the first signal FS to improve reception of a backscattered signal BS in the data obtaining phase. The information in the feedback signal FBS may comprise raw measurement data from the reader device regarding the first signal FS and the backscattered signal BS during the initialization phase, processed measurement data, and/or one or more adjustment parameters.

Generally, feedback information obtained at the excitation source system 100 may relate to a phase difference at the reader device 200 between the first signal FS and the backscatter signal BS. The adjustment parameter derived from the feedback information may relate to a phase shift for the first signal FS to obtain constructive interference between the adjusted first signal and the further backscatter signal at the first device as shown in step S10 below. By informing the excitation source system 100 of the phase required for the first signal FS to obtain constructive interference of the phase-adjusted first signal and the further backscatter signal, reception quality at the first device 200 can be enhanced. The feedback information obtained at the excitation source system 100 may further relate to at least one of a signal-to-noise ratio, SNR, of the backscatter signal and an error estimate for the backscatter signal. Both the SNR and error estimate can be used to manage the reception quality of the backscatter signal at the first device. If the SNR is low, for example, the first signal FS can be phase and amplitude adjusted to enhance the reception quality. If the error estimate indicates that reception quality is already good during the initialization phase, adjustments of the first signal FS may be minor or even absent.

Step S7 involves a processing step in the excitation source system 100. Processing step S7 may involve execution of one or more of the algorithms 161-163 as defined above. Selection of the algorithm(s) to be executed may depend on the information obtained during step S1.

Once the one or more adjustment parameters have been obtained at the excitation source system 100, the data obtaining phase may start. The initialization phase, i.e. the phase of obtaining the adjustment parameters, may be conducted several times, for example repetitively, alternately with the data obtaining phase, or under control of a managing system.

In step S8, the excitation source system transmits a second signal SS again that triggers a backscattered signal BS again in step S9.

In step S10, the adjustment of the first signal FS makes that the data in the backscattered signal BS can be received in an improved fashion, for example by obtaining constructive interference (indicated by the star symbol in FIG. 3) due to phase adjustments in the first signal FS. Other improvements, such as improving SNR, may also result from adjusting the first signal FS.

It is noted that, in principle, it is also possible to phase shift the second signal SS or both the first signal FS and the second signal SS. However, since the second signal SS (in most cases) traverses along the longer path and undergoes processing at the backscatter device 300, this would not be advantageous under normal conditions. The inventors have envisaged, however, that where the first signal FS is not a direct link and/or processing delay is negligible in the backscatter device 300, it may be useful to phase-shift the second signal SS.

The excitation source system 100 may be configured such that the first signal FS in step S4 contains a predetermined data sequence and the second signal SS in step S2 also contains the predetermined data sequence, or an indication configured to trigger the second device 300 to include the predetermined data sequence in the backscatter signal BS. In the latter case, the second device 300 may have pre-stored the predetermined data sequence in storage part 330. The first device 200 may be configured to receive and process a predetermined data sequence in the first signal in step S4 and the predetermined data sequence in the backscatter signal BS in step S3 to derive an error estimate for the backscatter signal and to transmit the error estimate in the feedback signal FBS of step S6. In one embodiment, the first device 200 may be configured to pre-store a predetermined data sequence in the first device 200, e.g. in storage 232, and receive the predetermined data signal in the backscatter signal BS in step S3 to derive an error estimate for the backscatter signal BS and to transmit the error estimate in the feedback signal FBS of step S6. The predetermined data sequence may be a known data sequence and may have been received by the first device 200 prior to receiving the sequence from the second device. The embodiment enables obtaining the error estimate and to decide on adjustment of the first signal FS. If reception quality is good during the initialization phase, the data obtaining phase may not be necessary to obtain data for a particular second device 300.

In FIG. 3, the excitation source system 100 is configured to transmit the first signal FS with a time delay, for example a phase shift, with respect to the second signal SS. The embodiment enables taking into account path differences for the first and second signals and/or processing time delay at the second device 300, if any.

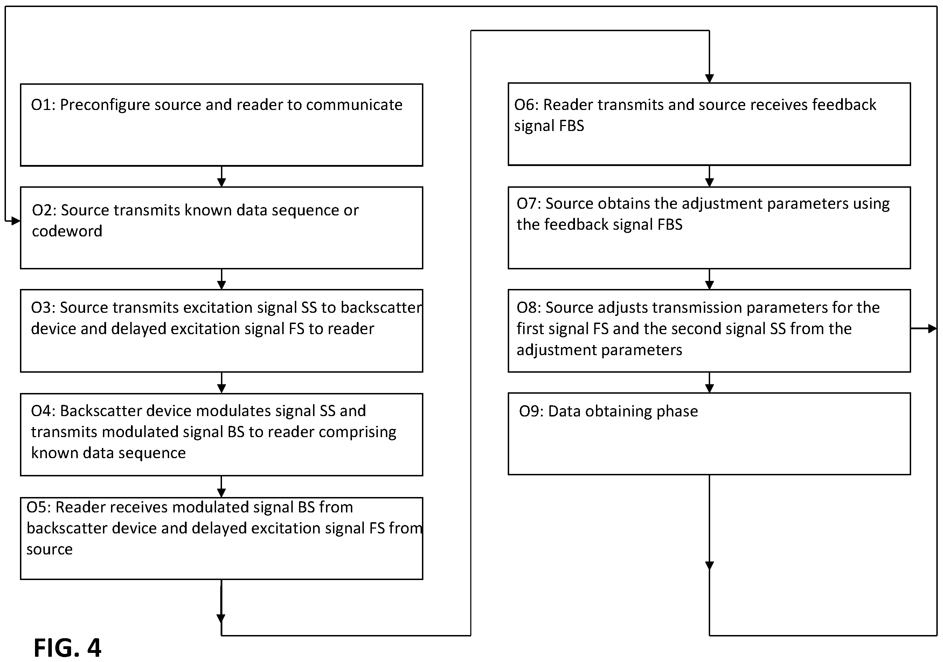

FIG. 4 shows a series of steps in a method to operate a backscatter communication system 10. The method starts from a presumption that the locations of the first and second device have been estimated.

In operation O1, the excitation source system 100 and the reader device 200 are pre-configured to communicate with one another in order to obtain data from the backscatter device 300. As such, the excitation source system 100 has obtained the necessary beam parameters to communicate with the reader device 200 and backscatter device 300 via beamforming. Beam Parameters may be obtained via typical downlink and uplink communications required to perform backscatter communications. For example, downlink beam-sweeping may be applied to obtain the optimal beam vector for each device, communicated as a response in the uplink channel. Channel state information, CSI, may be used to determine the beam strength required to communicate.

Where the excitation source system 100 and reader device 200 are not pre-configured, a pre-configuration process may be performed in which the reader device 200 requests to connect with the excitation source system 100. The excitation source system 100 may initially transmit a signal to excite the backscatter device 300. The backscatter device 300 may transmit modulated data. The reader device 200 will obtain this data and may then broadcast a response to the excitation source system 100 to identify itself as an available reader device 200. The excitation source system may communicate with the reader device 200 and establish a connection to support the reception of backscatter device 300 data.

In operation O2, the excitation source system 100 transmits a known data sequence, to be used by the backscatter device 300, to both the backscatter device 300 and the reader device 200. Alternatively, the known data sequence may be obtained from the backscatter device 300. For example, the backscatter device 300 may have a limited memory bank of one or more known data sequences. The excitation source system 100 may, alternatively, attach a codeword that is used to trigger the backscatter device 300 to transmit the known data sequence stored therein. Alternatively, the excitation source system 100 may transmit a codeword that is used to trigger the backscatter device 300 to not modulate the second signal SS but continue to backscatter the second signal SS. This may alleviate processing energy at the backscatter device 300 required to modulate the second signal SS and improve network energy efficiency.

In operation O3, the excitation source system 100 transmits an excitation signal, i.e. the second signal SS, across the beam for the backscatter device 300 towards the backscatter device 300 and transmits a delayed excitation signal, i.e. first signal FS, across the beam for the reader device 200 towards the reader device 200, using the respective beam parameters. The beam for the backscatter device 300 and the beam for the reader device 200 may be superimposed by combining the beam vectors for both the backscatter device 300 and reader device 200, where the beam delay is applied to the reader device 200 beam using a precoding weight.

Alternatively, during the initialization phase, the beam delay for the first signal FS may be zero. Optionally, the beam delay may be estimated using analytical or empirical data methods. Such methods include, for example, calculating distances between the devices from location estimates and using these to determine the necessary beam delay for constructive interference, for example to determine the phase difference between the two paths (excitation source system 100-reader device 200 and excitation source system 100-backscatter device 300-reader device 200) where the delay is proportional to time and difference in path distances. Another method is, for example, that the phase shift between the beam for the backscatter device 300 and the beam for the reader device 200 may be obtained from previous communications using the phase difference estimation algorithm, such as algorithm 172.

In operation O4, the backscatter device 300 receives and modulates the excitation signal SS of the excitation source system 100 with the known data sequence to output a modulated sequence signal, i.e. backscatter signal BS. The modulated sequence signal is transmitted from the backscatter device 300 using backscatter communications. Optionally, the backscatter device 300 may direct the backscattered signal towards the reader device 200 if the former is equipped with beamforming capabilities. As mentioned previously, this step may be initiated by the excitation source system 100 transmitting a codeword to the backscatter device 300. Alternatively, wherein the excitation source system 100 has instructed the backscatter device 300 to backscatter without modulation, this step may be initialized by the excitation source system 100 transmitting the necessary codeword to the backscatter device 300.

In operation O5, the reader device 200 receives the modulated sequence signal from the backscatter device 300 and the delayed excitation signal from the excitation source system 100. The reader device 200 uses the phase difference estimation algorithm from store 240 to obtain an estimate of the phase difference between the delayed excitation signal (first signal FS0 and the modulated sequence signal (backscatter signal BS). To that end, the reader device 200 compares the received signals to one another to determine the level of phase difference.

The reader device 200 may also use the SNR estimation algorithm from store 240 to obtain an SNR estimate of the received signal. To the end, the reader device 200 may extract the signal strength of the modulated sequence signal and divide this by the signal strength of the received noise.

The reader device 200 may also use the error estimation algorithm from store 240 to obtain an error estimate. The error estimate may be calculated by demodulating the received modulated sequence signal and comparing this signal to the known data sequence to determine the number of bits that are received in error. Examples of this include bit error rate, BER, calculations and bit error ratio calculations.

In operation O6, the reader device 200 transmits the phase difference, the SNR estimate and the error estimate to the excitation source system 100 as a feedback signal FBS.

The excitation source system 100 may compare the obtained error estimate to the error threshold in storage 163 using the error threshold algorithm from the store 170 to determine the error Indicator. Where the error indicator indicates that the current error estimate is below the error threshold, i.e. the reader device 200 is able to obtain the backscatter signal BS of the backscatter device 300 without substantial errors, adjustment of the first signal FS may not be necessary. Optionally, it may be determined that no(t) (much) constructive interference is required, so that the strength of the first signal FS may be reduced. Where the beam strength of the first signal FS is negligible, the first signal FS may be deactivated as no constructive interference is required.

In operation O7 the excitation source system 100 uses the feedback signal FBS from reader device 200 in a beam adjustment algorithm to determine the adjustment for the first signal beam required to enhance constructive interference at the reader device 200 and reduce the error. The excitation source system 100 may obtain the adjustments (increase or decrease) for the first signal beam by measuring the phase difference and the SNR estimate to obtain constructive interference parameters in storage 160 that meet the optimal level of constructive interference. The excitation source system 100 may use the error indicator within the beam adjustment algorithm to determine the necessary magnitude of constructive interference. Alternatively, the constructive interference parameters may require calibration or not be known. In this case, the parameters of the first signal beam may be learned through iterative adjustment and recording of the reader device 200 feedback by repeating operations O2-O6.

The feedback signal FBS may also include adjustments to the first signal beam for the reader device 200, and possibly to the second signal beam for the backscatter device 300 given measured changes necessary to maintain communications. For example, if the backscatter devices 300 have moved or if the respective channel conditions have changed. Examples of such methods include the use of CSI, beam sweeping, etc. The necessary measurements may be obtained using the downlink transmissions in operation steps O2-O5.

In operation O8, the excitation source system 100 adjusts the reader device 200 beams' beam parameters using the reader device 200 adjustment parameters.

It should be noted that operation steps O2-O8 may be performed in a different sequence or may include more or fewer steps.

In the above operation, the reader device 200 obtains the necessary (SNR estimate, error estimate and/or phase difference), which is later processed at the excitation source system 100 to calculate the required signal strength and/or phase delay for adjusting the first signal FS. Alternatively, the reader device 200 may be tasked with the processing of this data. In doing so, the following process may be performed.

The reader device 200 may query the excitation source system 100 for transmission power details. The reader device 200 then performs the beam adjustment algorithm as part of a response algorithm of store 240 in the reader device 200. The transmission power of the excitation source system 100 may be used to limit the proposed signal strength of signal to the reader device 200. The reader device 200 transmits the feedback signal FBS, which now includes the output of the beam adjustment algorithm. The excitation source system 100 may now directly apply the feedback information to adjust the first signal FS.

Operation O7 or O8 may terminate the initialization phase. The operations O8 and O9, resp. O9 constitute the data obtaining phase.

In operation O9, the excitation source system 100 transmits the excitation signal to both the backscatter device 300 and reader device 200 using the adjustments for the excitation beam of the excitation source system to the reader device 200. The backscatter device 300 receives and modulates the excitation source system 100 excitation signal with data and backscatters the modulated data signal BS. The reader device 200 receives a stronger modulated data signal from the backscatter device 300 using the delayed excitation signal FS from the excitation source system 100 as constructive interference.

The parameter tuning process described for operations O2-O7/O8 may be iteratively repeated to maintain constructive interference at the reader device 200 either before or after the data obtaining phase indicated in operation O9.

In one embodiment, the excitation source system 100 may be configured to contain or be connected to an orchestrating system, as shown by optional system 120 in FIG. 1, configured to coordinate a plurality of excitation sources in the excitation source system 100 regarding transmission of at least one of the first signal FS, the second signal SS, the adjusted first signal FS and the further second signal SS. The orchestrating system 120 may be used to enhance backscatter communication for a whole backscatter communication system 10 when multiple devices are employed in the system. Such plurality of excitation sources may be an antenna array, for example a multiple output antenna array such as a MIMO antenna array, but also a collection of individual base stations.

The orchestrating system 120 may comprise at least a transceiver, a data storage and a processor configured to execute one or more orchestration algorithms. Examples of such algorithms will be provided below. It should be appreciated that the orchestration system 120 may be part of the excitation source system 100 or be included in a reader device 200.

Where multiple devices (excitation sources, backscatter devices 300 and reader devices 200) are connected within a network, the collection of data from the backscatter devices 300 may be orchestrated in such a manner that reduces interference. This is more prevalent where each activation of a backscatter device 300 results in or requires an additional first signal path between the excitation source system 100 and the reader device 200. The orchestration system 120 may involve querying the network of devices and scheduling the resources appropriately.

The application of an orchestrating system 120 may require one or more further components in the orchestrating system. For example, a beam estimation algorithm may be applied which uses device data to predict the beam paths, i.e. beam path predictions, of different combinations of excitation source system 100, reader device 200 and backscatter device 300. The device data may include the type of device (e.g. excitation source, reader device 200, backscatter device 300), the position of the device (which may be obtained using localization algorithms, such as trilateration or triangulation), the operating frequencies of the device and/or the antenna features of the device.

An algorithm for beam orchestration may also be used. This beam orchestration algorithm may use the device data to allocate resources to devices (a resource schedule) in order to reduce interference. The beam orchestration algorithm may consider the relative energy required for each source to communicate with both the backscatter device 300 and the appointed reader device 200, given the device locations. The beam orchestration algorithm may consider pairing excitation source systems 100, backscatter devices 300 and reader devices 200 such that multiple backscatter devices 300 tags may be excited simultaneously.

For example, one set of excitation source system 100, backscatter device 300 and reader device 200 may be grouped together and allocated a time slot provided that the second signal SS for backscatter device 300, and the first signal to the reader device 200 and the backscatter signal BS do not interfere with the signals (for example, beams) produced by another set of excitation source system 100, backscatter device 300 and reader device 200 communications. This may be enabled using the beam path predictions obtained from the beam estimation algorithm. One set of excitation source system 100, backscatter device 300 and reader device 200 may be allocated a separate frequency channel in which to communicate such that another set of excitation source system 100, backscatter device 300 and reader device 200 can also communicate simultaneously.

Prior to the initialization phase, the orchestrating system 120 may query the network for device data. This may be through a broadcast or independent private communication channels. Use may be made of an orchestrating device, which may be an excitation source system 100 or a reader device 200. Device data may be conveyed over multiple devices in the network, for example via one or more reader devices to the excitation source system 100. Alternatively, the device data may be (pre-)stored in a system database and requested by the orchestrating system.

The orchestrating system may compose a resource schedule wherein resources are scheduled for transmission of the first and second signals of the excitation source system 100. The resource schedule may be provided to first and second devices, e.g. in step S1 of FIG. 3. Optionally, to reduce overhead, backscatter devices 300 may only be given a resource schedule if their capabilities permit the use of the resource schedule. For example, if the backscatter device 300 uses a single frequency channel, it would therefore not need to know the allocated frequency resources of the resource schedule. If the backscatter device 300 is completely passive and has no memory to store the resource schedule, such a schedule is not needed either. Devices within the network may comply with the resource schedule to avoid collisions, interference and/or minimize energy consumption.

In one embodiment of the present disclosure, the reader device 200 may initiate the system to improve its backscatter signal reception. In such an embodiment, the reader device 200 may verify with the excitation source system 100 that the source is controllable and capable of beamforming, for example. To that end, the reader device 200 may store certain excitation source system 100 device conditions (the "excitation source system 100 conditions") in storage 230 required to enable constructive interference. Examples of excitation source system 100 conditions may include data on controllability of the source, presence of an antenna array in the source, beamforming capability of the source, etc. Such status can be retrieved in step S1 of FIG. 3.

Prior to the initialization phase, the reader device 200 may use the excitation source system 100 conditions to query the excitation source system 100 for relevant parameter information. Where the returned data is not in agreement with the excitation source system 100 conditions, the system is not enabled. For example, if the communication reveals that the excitation source system 100 is not controllable, the reader device cannot enable the system. Alternatively, the reader device 200 may request that the excitation source system 100 assigns the backscatter device 300 excitation task to another nearby excitation source system 100 or device, possibly via the orchestrating system 120 when available.

In one embodiment, the excitation source system 100 may be configured to contain or be connected to a reflective intelligent surface, RIS, to obtain the adjusted first signal FS by adjusting the first signal in accordance with the one or more adjustment parameters, as shown in FIG. 1. The RIS can be used to enable control of the first signal FS by controlling reflection of an incoming signal from an excitation source to generate the adjusted first signal FS. That is, the RIS is especially useful during the data obtaining phase if adjustment of the first signal is determined and necessary, for example when an excitation source itself is not controllable for managing the reception quality.

If the excitation source system 100 is controllable, the RIS 130 may still serve as an additional element within the system to control the first signal, such as the beam vector thereof, for the reader device 200. This may amount to the first signal in the initialization phase as well as to the data obtaining phase.

Where the excitation source system 100 is non-controllable, the RIS may be controlled by the reader device 200 to adjust the strength and/or phase of the first signal FS from excitation source system 100 so as to establish the delayed excitation signal and achieve constructive interference at the reader device 200. The excitation source system 100 may transmit an excitation signal comprising or consisting of a continuous sinusoidal waveform. Since the signal may be periodic, constructive interference may be achieved using a delay of multiple wavelengths.

The RIS 130 may be configured to be capable of directional beamforming of incident signals, for example from an excitation source, and wirelessly communicating with multiple devices, containing, for example, an antenna array, a data storage device, a processor and a controller. The controller may be equipped with a separate receive antenna. Methods to communicate with the controller and its coordinates (the "controller information) may be stored on the data storage of the RIS.

Features of the RIS (the "RIS parameters") may be stored on the data storage device of the RIS. The RIS parameters may include the RIS dimensions, position and orientation of the RIS, properties of the RIS antenna elements, etc. The excitation source system 100 may have obtained the necessary RIS Parameters, beam parameters and/or controller Information to communicate to the reader device 200, via the RIS. Where the source is not controllable, the reader device 200 may initiate the connection process as described above and request the relevant RIS parameters.

The RIS 130 may also be able to execute one or more RIS algorithms. A constructive criterion algorithm may use the backscatter device 300, reader device 200 and RIS features to determine if constructive interference from a non-controllable excitation source system 100 can be achieved using the RIS 130. If possible, the constructive criterion is met. An example of the constructive criterion may be a Boolean value where a 'True' value indicates that the constructive criterion is met.

Since a RIS may delay a signal, constructive interference can be achieved if the excitation signal from the excitation source system 100, obtained at the reader device 200 via the backscatter device 300, is received after the first signal obtained via the RIS. Therefore, the constructive criterion is met if constructive interference. Analytical processing of the communication ranges of the required communication paths using the location data of each device may be used to determine if the constructive criterion can be achieved. The RIS may only be able to delay the excitation signal from the excitation source system 100 by a fixed amount. Therefore, this may be considered as a maximum threshold for the difference in communication paths. Where the constructive criterion is not met, the reader device 200 may communicate with backscatter device 300 to increase the delay of the backscatter communications at backscatter device 300.

Where the excitation signal of the excitation source system 100 is not a continuous sinusoidal signal, the reader device 200 may use the RIS parameters within the constructive criterion algorithm to determine if constructive interference is achievable. i.e. the constructive criterion is met. Effectively determining if the backscatter signal BS received via the backscatter device 300 is longer than the first signal FS received via the RIS. i.e. can the RIS delay the excitation signal to achieve constructive interference may be analyzed.

A RIS selection algorithm may be applied that determines the optimal RIS for constructive interference if multiple RIS' are available. The optimal RIS may be determined analytically by comparing the RIS parameters, for example, using the location information available to identify the nearest RIS. The RIS selection algorithm may consider the maximum delay achievable by a RIS, as described above, which may affect the communication range of the RIS, relative to the excitation source system 100, backscatter device 300 and reader device 200. Where there are multiple RISs available, the excitation source system 100 may identify the best RIS for the task using the RIS Parameters within the RIS selection algorithm.

Initiation may be performed by broadcasting a request to identify local RIS devices.

Operation with a RIS in the context of FIG. 4 involves the following further steps, for example

In operation step O3, the delayed excitation signal is transmitted towards the reader device 200 via the RIS 130. Where the excitation source system 100 is not controllable, the excitation signal has no delay component.

In operation step O5, the delayed excitation signal from the excitation source system 100 is obtained, via the RIS 100 at the reader device 200.

In operation step O6, the reader device 200 transmits the feedback signal FBS to the excitation source system 100, possibly via the RIS.

Where the excitation source system 100 is not controllable, the RIS must be updated to adjust the excitation signal of the excitation source system 100. Therefore, processing of the adjustment parameters may be handled at the reader device 200.

The following method steps may be carried out to that end. The reader device 200 may determine the error indicator and generate adjustments which may then be shared with the RIS 130 through a transmission to the RIS controller. The excitation source system 100 may use the reader device 200 beam parameters to adjust the first signal. The reader device 200 beams' beam vector, for example, may be transmitted to the RIS 130 to maintain the signal connection with the reader device 200. Where the excitation source system 100 is not controllable, the RIS 130 then updates its beam parameters using the feedback information.

In operation step O9, the excitation source system 100 transmits the excitation signal to both the backscatter device 300 and reader device 200, where the latter is transmitted via the RIS that applies the adjustments.

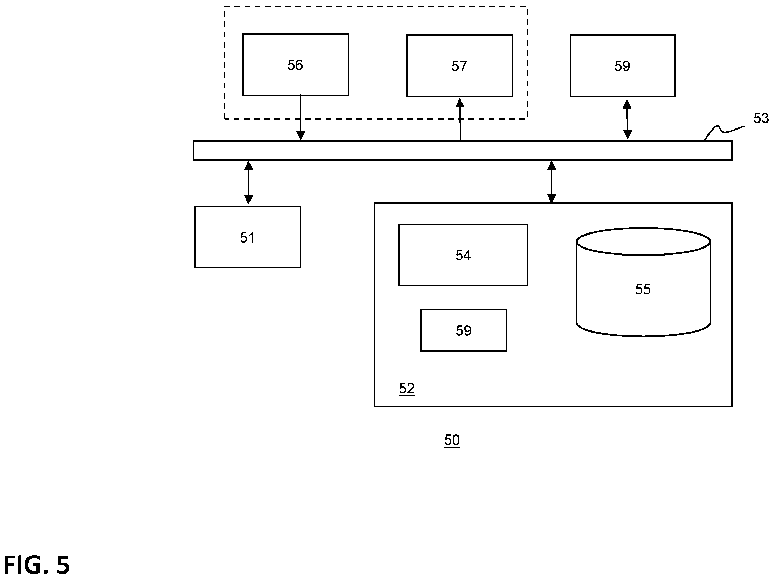

FIG. 5 depicts a block diagram illustrating an exemplary processing system according to a disclosed embodiment, e.g. an excitation source system 100 or a first device 200 for use in a backscatter communication system 100. As shown in FIG. 5, the processing system 50 may include at least one processor 51 coupled to memory elements 52 through a system bus 53. As such, the processing system may store program code within memory elements 52. Further, the processor 51 may execute the program code accessed from the memory elements 52 via a system bus 53. In one aspect, the processing system may be implemented as a computer system that is suitable for storing and/or executing program code. It should be appreciated, however, that the processing system 50 may be implemented in the form of any system including a processor and a memory that is capable of performing the functions described within this specification.

The memory elements 52 may include one or more physical memory devices such as, for example, local memory 54 and one or more bulk storage devices 55. The local memory may refer to random access memory or other non-persistent memory device(s) generally used during actual execution of the program code. A bulk storage device may be implemented as a hard drive or other persistent data storage device. The processing system 50 may also include one or more cache memories (not shown) that provide temporary storage of at least some program code in order to reduce the number of times program code must be retrieved from the bulk storage device 55 during execution.

Input/output (I/O) devices depicted as an input device 56 and an output device 57 optionally can be coupled to the processing system. Examples of input devices may include, but are not limited to, a space access keyboard, a pointing device such as a mouse, or the like. Examples of output devices may include, but are not limited to, a monitor or a display, speakers, or the like. Input and/or output devices may be coupled to the processing system either directly or through intervening I/O controllers.

In an embodiment, the input and the output devices may be implemented as a combined input/output device (illustrated in FIG. 5 with a dashed line surrounding the input device 56 and the output device 57). An example of such a combined device is a touch sensitive display, also sometimes referred to as a "touch screen display" or simply "touch screen" that may be provided with the UE. In such an embodiment, input to the device may be provided by a movement of a physical object, such as e.g. a stylus or a finger of a person, on or near the touch screen display.

A network adapter 58 may also be coupled to the processing system to enable it to become coupled to other systems, computer systems, remote network devices, and/or remote storage devices through intervening private or public networks. The network adapter may comprise a data receiver for receiving data that is transmitted by said systems, devices and/or networks to the processing system 50, and a data transmitter for transmitting data from the processing system 50 to said systems, devices and/or networks. Modems, cable modems, and Ethernet cards are examples of different types of network adapter that may be used with the processing system 50.

As pictured in FIG. 5, the memory elements 52 may store an application 59. In various embodiments, the application 59 may be stored in the local memory 54, the one or more bulk storage devices 55, or apart from the local memory and the bulk storage devices. It should be appreciated that the processing system 50 may further execute an operating system (not shown in FIG. 5) that can facilitate execution of the application 59. The application 59, being implemented in the form of executable program code, can be executed by the processing system 50, e.g., by the processor 51. Responsive to executing the application, the processing system 50 may be configured to perform one or more operations or method steps described herein.

In one aspect of the present invention, one or more components of the orchestrating system as disclosed herein may represent processing system 60 as described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 61 described herein.

The terminology used herein is for the purpose of describing particular embodiments only and is not intended to be limiting of the invention. As used herein, the singular forms ""a" "an" and "th" are intended to include the plural forms as well, unless the context clearly indicates otherwise. It will be further understood that the terms "comprise" and/or "comprising" when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration but is not intended to be exhaustive or limited to the implementations in the form disclosed. Many modifications and variations will be apparent to those of ordinary skill in the art without departing from the scope of the claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. An excitation source system configured to transmit a first signal to a first device and a second signal to a second device, wherein the second signal is configured to excite the second device to generate a backscatter signal receivable by the first device, wherein the excitation source system is configured to:
receive a feedback signal from the first device, the feedback signal enabling the excitation source system to determine feedback information based on reception of the first excitation signal and the backscatter signal,
apply or determine one or more adjustment parameters, based on the feedback information, for an adjusted first signal for managing reception quality at the first device of a further backscatter signal triggered by a further second signal from the excitation source system.

2. The excitation source system according to claim 1, wherein the feedback information relates to a phase difference between the first signal and the backscatter signal and wherein at least one of the one or more adjustment parameters relates to a phase shift for the first signal to obtain constructive interference between the adjusted first signal and the further backscatter signal.

3. The excitation source system according to claim 1 or 2, wherein the feedback information relates to at least one of the following:
a signal-to-noise ratio, SNR, of the backscatter signal; and
an error estimate for the backscatter signal.

4. The excitation source system according to one or more of the preceding claims, wherein
the first signal contains a predetermined data sequence; and
the second signal contains the predetermined data sequence, or an indication configured to:
trigger the second device to include the predetermined data sequence in the backscatter signal, or
instruct the second device to not include the predetermined data sequence in the backscatter signal.

5. The excitation source system according to one or more of the preceding claims, wherein the excitation source system is configured to at least one of the following:
transmit the first signal with a time delay with respect to the second signal; and
perform beamforming of the first signal and the second signal.

6. The excitation source system according to one or more of the preceding claims, wherein the excitation source system is configured to receive a control capacity request from the first device and provide a control capacity indication to the first device.

7. The excitation source system according to one or more of the preceding claims, wherein the excitation source system is configured to
transmit the adjusted first signal to the first device in accordance with the one or more adjustment parameters; and
transmit the further second signal to the second device, wherein the further second signal is configured to trigger the further backscatter signal.

8. The excitation source system according to one or more of the preceding claims, wherein the excitation source system comprises one or more excitation sources and further comprises or is connected to at least one of:
at least one reflective intelligent surface, RIS, configured to obtain the first adjusted signal by adjusting the first signal in accordance with the one or more adjustment parameters;
an orchestrating system configured to coordinate a plurality of excitation sources in the excitation source system regarding transmission of at least one of the first signal, the second signal, the adjusted first signal and the further second signal.

9. The excitation source system according to one or more of the preceding claims, wherein the excitation source system is implemented at least in part in a telecommunications system, such as a 4G, 5G or 6G telecommunications system.

10. A first device configured to read data from a second device through backscatter communication, wherein backscatter communication is triggered by an external excitation source system, wherein the first device is configured to
receive a first signal from the excitation source system;
receive a backscatter signal from the second device;
transmit a feedback signal to the excitation source system enabling the excitation source system to determine feedback information based on reception of the first excitation signal and the backscatter signal, wherein, optionally, the feedback information contains at least one of one or more adjustment parameters to adjust the first signal determined based on the reception of the first excitation signal and the backscatter signal.

11. The first device according to claim 10, wherein the feedback information relates to phases of the first signal and the backscatter signal, a phase difference between the first signal and the backscatter signal, and/or a phase shift for the first signal.

12. The first device according to claim 10 or 11, wherein the feedback information further relates to at least one of the following:
a signal-to-noise ratio, SNR, of the backscatter signal; and
an error estimate for the backscatter signal.

13. The first device according to one or more of the preceding claims 10-12, wherein the first device is configured to at least one of
receive and process a predetermined data sequence in the first signal and the predetermined data sequence in the backscatter signal to derive an error estimate for the backscatter signal and to transmit the error estimate in the feedback signal;
pre-store a predetermined data sequence in the first device and receive the predetermined data signal in the backscatter signal to derive an error estimate for the backscatter signal and to transmit the error estimate in the feedback signal.

14. The first device according to one or more of the preceding claims 10-13, wherein the first device is configured to transmit a control capacity request to the excitation source system and to receive a control capacity indication from the excitation source system.

15. The first device according to one or more of the preceding claims 10-14, wherein the first device is configured to:
receive an adjusted first signal from the excitation source system;
receive a further backscatter signal containing data of the second device, wherein the further backscatter signal is enhanced by the adjusted first signal.

16. The first device according to one or more of the claims 10-15, wherein the first device is a 3GPP standard compliant device, such as a user equipment, UE, configured to communicate wirelessly with a 3GPP standard compliant telecommunications network, such as a 4G, 5G or 6G telecommunications network.
